**Europäisches Patentamt**

**European Patent Office**

**Office européen des brevets**

(19)

(11) Numéro de publication : **0 006 479
B1**

(12) # FASCICULE DE BREVET EUROPÉEN

(45) Date de publication du fascicule du brevet :
29.07.81

(51) Int. Cl.³ : **G 06 K 15/08**, B 41 J 1/30

(21) Numéro de dépôt : **79101714.8**

(22) Date de dépôt : **01.06.79**

(54) **Dispositif pour synchroniser les déplacements du chariot et du disque d'impression rotatif dans une imprimante à la volée.**

(30) Priorité : 26.06.78 US 918998

(43) Date de publication de la demande :
09.01.80 (Bulletin 80/01)

(45) Mention de la délivrance du brevet :
29.07.81 Bulletin 81/30

(84) Etats contractants désignés :
**BE CH DE FR GB NL**

(56) Documents cités :
**DE - A - 2 310 762
FR - A - 2 156 980
US - A - 3 946 852
US - A - 4 030 591**

(73) Titulaire : **International Business Machines Corporation**

**Armonk, N.Y. 10504 (US)**

(72) Inventeur : **Kane, Milburn Houseman
9812 Lonsdale Drive
Round Rock Texas 78664 (US)**

(74) Mandataire : **Siccardi, Louis
COMPAGNIE IBM FRANCE Département de Propriété Industrielle
F-06610 La Gaude (FR)**

Imprimerie Jouve, 17, rue du Louvre, 75001 Paris, France

# Dispositif pour synchroniser les déplacements du chariot et du disque d'impression rotatif dans une imprimante à la volée.

## Domaine Technique

La présente invention concerne les imprimantes à la volée du type à disque porte-caractères rotatif dans lesquelles l'impression est effectuée pendant qu'au moins le chariot sur lequel le disque est monté est en déplacement le long de la ligne à imprimer. Plus particulièrement, la présente invention a trait à la synchronisation du déplacement du disque porte-caractères qui tourne sur une distance angulaire variable, avec le déplacement du chariot de sorte que le chariot en déplacement atteint une position d'impression choisie en même temps que le disque rotatif atteint le caractère d'imprimerie choisi pour cette position d'impression.

## Etat de la technique antérieure

Les imprimantes qui utilisent un disque rotatif portant des caractères sur sa périphérie sont bien connues.

Plusieurs imprimantes de ce type sont disponibles dans le commerce. Les imprimantes à disque rotatif peuvent être divisées en plusieurs catégories selon que l'on met l'accent sur la manière suivant laquelle le disque tourne ou sur la manière suivant laquelle le chariot se déplace.

Si l'on met l'accent sur la manière suivant laquelle le disque tourne, on peut diviser ces imprimantes en une première catégorie dans laquelle le disque tourne constamment et en une seconde catégorie dans laquelle le déplacement du disque est intermittent. Dans la première catégorie la rotation du disque n'est pas arrêtée chaque fois qu'un caractère est imprimé à l'aide du marteau qui vient de frapper le disque. Dans la seconde catégorie, le disque est déplacé en rotation jusqu'à la position d'impression désirée, puis arrêté. Il n'y a aucune rotation du disque pendant la frappe du marteau, c'est-à-dire, lorsque l'impression s'effectue.

Une autre division des imprimantes à disque peut être effectuée en mettant l'accent sur le déplacement du chariot. Dans certaines imprimantes la course du chariot est arrêtée chaque fois qu'une impression est effectuée. Dans d'autres imprimantes, le chariot est en déplacement au moment où l'impression se produit. Dans le type dans lequel le chariot est en déplacement au moment où l'impression se produit, de même que dans le type dans lequel le chariot est arrêté lorsque l'impression se produit, le disque peut ou non tourner au moment de l'impression. Dans certaines imprimantes dans lesquelles le chariot se déplace à une vitesse fixe déterminée au moment où l'impression s'effectue, le chariot est ralenti et arrêté entre les positions d'impression afin de donner au disque en rotation le temps de se déplacer jusqu'au caractère désiré.

On a donné ci-après une liste de quelques uns des brevets qui décrivent des imprimantes à disque rotatif.

Le brevet des E.U.A. No. 3 461 235 délivré le 12 août 1969, décrit une imprimante à disque dont le disque tourne constamment. Le chariot s'arrête à chaque position d'impression.

Le brevet des E.U.A. No. 3 707 214 délivré le 26 décembre 1972, décrit une imprimante à disque qui comporte des commandes séparées pour le disque d'impression et pour son chariot. Le disque d'impression et le chariot s'arrêtent à chaque position d'impression.

Le brevet des E.U.A. No. 3 356 199 délivré le 5 décembre 1967, décrit une imprimante à disque rotatif dans laquelle le disque tourne constamment. Les éléments porte-caractères sont disposés suivant une configuration en spirale particulière. Le chariot se déplace également à une vitesse constante qui est synchronisée avec le déplacement du disque d'une manière telle que tout caractère désiré puisse être imprimé à chaque position d'impression.

Le brevet des E.U.A. No. 3 742 845 délivré le 3 juillet 1973, représente sur la figure 11 une imprimante à tambour qui comporte un tambour qui tourne constamment. Il est suggéré que ce tambour pourrait être monté sur un chariot. Le chariot devrait s'arrêter à chaque position d'impression pour donner au tambour le temps nécessaire pour tourner jusqu'au caractère désiré.

Le brevet des E.U.A. No. 3 794 150 délivré le 26 février 1974, décrit une imprimante à tambour qui comporte un chariot à avance pas-à-pas. Le chariot s'arrête à chaque position d'impression jusqu'à ce que le tambour ait atteint la position désirée.

Le brevet des E.U.A. No. 4 101 006 délivré le 18 juillet 1978, décrit un dispositif de commande de chariot pour une imprimante à disque arythmique dans laquelle le chariot se déplace normalement à une vitesse prédéterminée. L'impression s'effectue toujours à la même vitesse prédéterminée ; cependant, si le temps n'est pas suffisant pour que le disque ait pu tourner jusqu'au caractère suivant désiré, le chariot est ralenti entre les positions d'impression puis ramené à la vitesse prédéterminée.

Le brevet des E.U.A. No. 4 030 591 délivré le 21 juin 1977, décrit une imprimante à disque rotatif dans laquelle le chariot se déplace à diverses vitesses lorsque l'impression résultant du déclenchement du marteau se produit. Ainsi, le déclenchement du marteau d'impression doit être synchronisé en fonction de la vitesse du chariot dans le cas particulier en cause.

Le brevet des E.U.A. No. 3 858 509, délivré le 7 janvier 1975, décrit un appareil d'impression à disque rotatif dans lequel la force de frappe appliquée au marteau peut être modifiée entre une force « légère » et une force « dure ». Cependant, dans l'appareil de ce brevet, l'impression n'est pas faite « à la volée » et il n'est pas besoin de coordonner la vitesse du chariot et le temps de déplacement du marteau pour assurer que le caractère à imprimer se trouve au point d'impact d'impression au moment où il est frappé sur le support d'impression.

Le brevet des E.U.A. No. 4 035 781 délivré le 12 juillet 1972, mentionne un procédé de commande d'une imprimante suivant lequel à la suite d'un « raté » d'impression, au moins un nouvel essai d'impression est effectué avant que l'appareil ne soit arrêté pour l'exécution d'une routine de correction d'erreur. Toutefois ce brevet ne concerne pas l'impression à la volée dans laquelle le chariot est en mouvement au moment de l'impression. Dans l'appareil de ce brevet, le chariot s'arrête à chaque position d'impression. Ainsi, ce brevet ne concerne pas une solution au problème de la synchronisation de paramètres chrono-dépendants dans les imprimantes à la volée.

Il existe également des imprimantes à disque rotatif dans lesquelles le chariot se déplace à diverses vitesses, dans lesquelles le disque porte-caractères rotatif se déplace en rotation sur diverses distances et dans lesquelles le marteau d'impression est actionné avec diverses forces afin d'obtenir une qualité d'impression élevée et régulière. Dans de telles imprimantes on rencontre ainsi un nouvel élément, à savoir l'utilisation d'une force variable du marteau laquelle, à la différence de ce qui se passe dans l'appareil du brevet des E.U.A. No. 3 858 509, doit être coordonnée avec une vitesse variable du chariot et avec une distance de rotation variable du disque pour obtenir la synchronisation désirée du caractère d'imprimerie choisi avec la position d'impression choisie du chariot. Les variations de la force d'impact du marteau se traduisent par des variations correspondantes dans le temps de vol du marteau. Ainsi, dans de telles imprimantes, il est nécessaire de synchroniser trois variables chrono-dépendantes ; à savoir, la distance variable dont le disque porte-caractères doit tourner, la vitesse variable du chariot et le temps de vol variable du marteau.

Dans une large mesure, l'objectif de l'impression à la volée est de répondre à la demande, de plus en plus insistante dans le domaine des imprimantes, de vitesses d'impression de plus en plus grandes, supérieures à 50 caractères à la seconde et s'approchant de 100 caractères à la seconde. Cependant, pour qu'une imprimante à la volée fonctionne à la vitesse maximale susceptible d'être atteinte, il est nécessaire que les commandes de l'appareil coordonnent au moins deux variables chrono-dépendantes en les synchronisant. S'il n'en était ainsi, des erreurs d'impression se produiraient. Etant donné que les variables chrono-dépendantes, telles que le temps nécessaire au disque rotatif pour aller d'un caractère au suivant ou le temps nécessaire au chariot pour se déplacer d'une première position d'impression à une seconde position d'impression sont l'objet d'irrégularités passagères, il devient de plus en plus difficile d'accroître les vitesses d'impression des imprimantes tout en restant à l'intérieur des tolérances admissibles de telles irrégularités passagères. Habituellement, ce résultat est obtenu en faisant fonctionner l'appareil à une fréquence comprise à l'intérieur des tolérances de temps du paramètre chrono-dépendant le plus lent qui doit être coordonné. Dans le cas d'une imprimante à grande vitesse, ce paramètre est habituellement le temps nécessaire au disque rotatif pour tourner de la distance d'un caractère donné au caractère choisi suivant. L'impression ne s'effectue pas avant qu'une période de temps suffisante pour que le disque rotatif ait pu atteindre le caractère choisi suivant, se soit écoulée. Cependant, cette solution limite considérablement les vitesses de fonctionnement.

Exposé de l'invention

La présente invention a pour objet un dispositif de synchronisation de l'impression dans une imprimante à la volée du type décrit par exemple dans le brevet des E.U.A. No 4 030 591 précité. Dans ce type connu d'imprimante, un chariot susceptible de se déplacer, à une vitesse qui peut être variable, le long d'une ligne d'impression, porte un disque d'impression rotatif muni d'une série de caractères mobiles conçus pour effectuer une impression lorsqu'ils sont frappés par un marteau de frappe monté sur le chariot. Aux fins de la sélection des caractères, le disque d'impression tourne d'une distance angulaire variable, au cours du déplacement du chariot, d'un premier caractère choisi en coïncidence avec le passage du chariot en regard d'une première position d'impression, jusqu'à un second caractère choisi en coïncidence avec le passage du chariot en regard d'une seconde position d'impression. Le déplacement du chariot et le déplacement du disque d'impression sont commandés par des moyens de commande qui assurent une coïncidence entre l'arrivée du second caractère en position et l'arrivée du chariot dans la seconde position d'impression. Cependant cette coïncidence ne se produit que pour une vitesse d'impression relativement faible et dès lors que l'on tente d'augmenter cette vitesse, de nombreux défauts de coïncidence se produisent qui rendent l'impression inacceptable. Afin de résoudre ce problème, le dispositif de synchronisation selon l'invention comporte des moyens pour détecter un défaut de coïncidence entre le chariot et le disque d'impression à la seconde position d'impression et des moyens, fonctionnant en réponse à un défaut de coïncidence détecté, pour inverser le sens du déplacement du chariot et le ramener vers la position d'impression ou position antérieure, tout en permettant la poursuite ininterrompue du déplacement du disque d'impression vers le second caractère choisi. En outre, le dispositif selon l'invention comporte des moyens pour remettre en route le déplacement du chariot vers la seconde position d'impression et des moyens pour maintenir le disque d'impression sur le second caractère choisi jusqu'à l'arrivée du chariot à la seconde position d'impression. De cette manière, une coïncidence se produit si le disque d'impression a atteint le second caractère au moment où le chariot remis en route atteint la seconde position d'impression. Dans un tel cas, le marteau de frappe peut être actionné pour imprimer le caractère.

La présente invention obtient des vitesses d'impression plus grandes dans les imprimantes à la volée en faisant fonctionner le disque d'impression avec des tolérances de temps nettement plus serrées que celles considérées nécessaires dans la technique antérieure pour empêcher les erreurs dues à un défaut de coïncidence entre l'instant d'arrivée du chariot à la position d'impression suivante et celui de l'arrivée du caractère choisi pour cette position d'impression. La présente invention reconnaît qu'en resserrant ces tolérances de temps au-delà des limites conventionnelles acceptées, quelques défauts de coïncidences se produiront. Cependant la présente invention a réalisé un appareil pour corriger de tels défauts de coïncidence tout en faisant fonctionner l'imprimante à une vitesse globale, en caractères à la seconde, supérieure à celle des imprimantes connues. A cet égard, on estime qu'avec l'appareil de la présente invention, il est possible de réduire les tolérances de temps d'un disque porte-caractères rotatif à un point tel que des défauts de coïncidence pouvant même atteindre jusqu'à 5 % des caractères à imprimer sur une page donnée pourraient se produire et être corrigés en moins de temps qu'il ne serait nécessaire pour produire la même page imprimée avec une imprimante classique ayant des tolérances de temps du disque rotatif si grandes qu'il ne se produit pratiquement aucun défaut de coïncidence.

Brève description des figures

On se référera maintenant aux dessins sur lesquels on a représenté un mode de réalisation préféré de l'invention et sur lesquels les mêmes références ont été utilisées dans toutes les figures pour désigner les mêmes éléments ; dans ces dessins :

La figure 1 représente une imprimante appropriée pour être utilisée avec la présente invention.

La figure 2 est une vue schématique montrant la relation qui existe entre le point de déclenchement du marteau et le point d'impact lorsque le chariot se déplace à une vitesse relativement élevée.

La figure 3 est une vue similaire à celle de la figure 2 mais dont elle diffère par le fait que le chariot se déplace à une vitesse relativement lente.

La figure 4 est un graphique qui montre les diverses vitesses utilisées pour déplacer le chariot sur une certaine distance afin de fournir un exemple de déplacement du chariot au cours de l'impression.

La figure 5 est un schéma qui illustre la durée de certaines périodes de retard et les largeurs des impulsions de commande du marteau d'impression utilisées dans la présente invention pour commander le marteau d'impression.

La figure 6 est un tableau qui montre la relation entre les divers retards et les diverses largeurs d'impulsion utilisées pour obtenir une force d'impact d'impression désirée et une vitesse d'échappement ou déplacement désirée du chariot d'impression.

La figure 7 représente, sous forme d'un schéma-bloc les circuits servant à commander le fonctionnement des moteurs qui déplacent le chariot et le disque d'impression et des circuits qui commandent le déclenchement du marteau d'impression.

La figure 8 est un schéma-bloc plus détaillé des circuits qui servent à commander la sélection des caractères sur le disque d'impression.

La figure 9 est un schéma-bloc plus détaillé des circuits qui servent à commander le déclenchement du marteau d'impression, à commander l'échappement ou déplacement du chariot et à synchroniser ces opérations avec le déplacement du disque et notamment à commander l'opération de ré-essai d'impression à la volée effectuée conformément à la présente invention.

Description détaillée d'un mode de réalisation de l'invention

Dans ce qui suit, on décrira l'invention en relation avec une imprimante à la volée ayant trois variables chrono-dépendantes à savoir la vitesse du chariot, la distance de déplacement du disque porte-caractères rotatif au cours de la sélection du caractère et le temps de vol du marteau de frappe. Cependant, il est bien entendu que les opérations de ré-essai d'impression et l'appareil selon la présente invention sont également applicables à une imprimante dont le marteau produit un impact invariable, c'est-à-dire, a un temps de vol invariable.

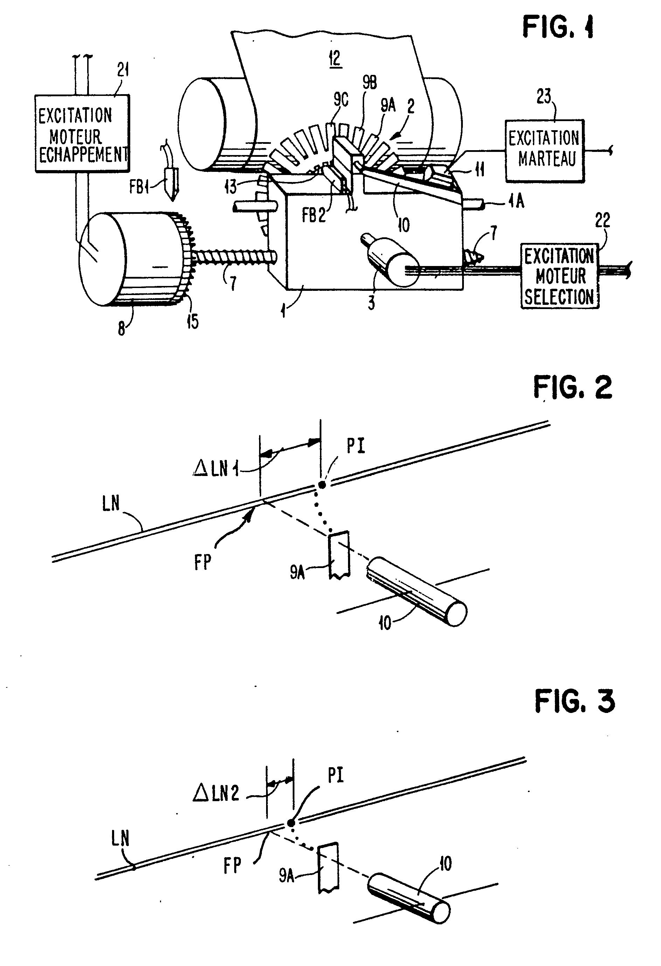

La figure 1 représente les principaux éléments mécaniques d'une imprimante à laquelle est appliquée l'invention. Ces éléments ont été représentés sous une forme schématique étant donné qu'ils sont bien connus et que la présente invention concerne le mécanisme de commande des moteurs pas-à-pas et du marteau d'impression de l'imprimante et non les éléments mécaniques proprement dits.

Comme représenté sur la figure 1, un chariot 1 est monté pour coulisser sur une tige de guidage 1A et il porte une roue ou disque d'impression rotatif 2 entraîné par un moteur pas-à-pas 3. Le chariot 1 est entraîné par une vis-mère 7 laquelle est entraînée par un moteur pas-à-pas 8. Il va de soi que, le moteur 8 pourrait entraîner une courroie laquelle pourrait, à son tour, entraîner le chariot 1.

Le disque porte-caractères 2 est un disque qui comporte un certain nombres d'éléments porte-caractères mobiles, tels que les rayons souples ou doigts porte-caractères 9A, 9B, 9C, etc. appelés ci-après « pétales ». L'impression d'un caractère désiré quelconque est effectuée par l'actionnement d'un marteau d'impression 10 qui est mû par un solénoïde 11, le marteau et le solénoïde étant tous deux montés sur le chariot 1. Lorsque le doigt porte-caractère approprié s'approche de la position d'impression, le solénoïde 11 actionne le marteau et le projette sur le doigt porte-caractère choisi, amenant ce dernier en contact avec une feuille de papier 12 ou autre support d'impression. Une roue émettrice 13 fixée au disque porte-caractères 2, avec lequel elle tourne coopère avec un détecteur FB2 pour produire des impulsions de repérage de position servant à commander le fonctionnement de l'imprimante. L'émetteur comporte une série de dents dont chacune correspond à un doigt 9A, 9B, 9C, etc. Une impulsion de position de départ ou position zéro est engendrée à chaque tour de la roue d'impression par une unique dent prévue sur une autre roue émettrice (non représentée). Les commandes de l'imprimante peuvent ainsi déterminer la position angulaire du disque porte-caractères 2 à un moment quelconque en comptant les impulsions reçues depuis la dernière impulsion de position de départ. Une roue émettrice dentée 15 est montée sur l'arbre du moteur 8 et fournit, en combinaison avec un détecteur FB1, des impulsions qui indiquent la position du chariot 1.

Les moteurs pas-à-pas 3 et 8 sont actionnés par des circuits d'excitation classiques 21 et 22. Des exemples de circuits d'excitation qui peuvent être utilisés sont décrits, par exemple, dans le brevet des E.U.A. No 3 636 429. Le solénoïde 11 du marteau est excité par un circuit 23 qui est également classique.

Les actions de positionnement du chariot 1 et de positionnement de la roue d'impression 2 sont, en général, indépendantes si ce n'est qu'une coordination est nécessaire au moment où l'impression se produit. Le disque porte-caractères 2 et le chariot 1 doivent être dans une position choisie (mais il n'est pas nécessaire qu'ils soient au repos) lorsque le marteau 10 frappe le disque porte-caractères 2.

Sur les figures 2 et 3, auxquelles on se référera maintenant, on a représenté la relation entre le point de déclenchement du marteau, (référencé par FP), (c'est-à-dire le moment auquel le déclenchement du marteau est commencé) et le point d'impact (référencé par PI) sur la ligne d'impression (référencée LN). Sur la figure 2, cette relation a été représentée pour le cas où le chariot 1 se déplace à une vitesse relativement grande tandis que sur la figure 3 on a représenté cette relation pour le cas où le chariot se déplace à une plus faible vitesse. Comme représenté sur la figure 2, une avance du point de déclenchement du marteau, relativement importante, indiquée par ΔLNI, est nécessaire pour que le doigt porte-caractères ou « pétale » 9A imprime sur la ligne d'impression au point d'impact PI tandis que, sur la figure 3, l'avance ΔLN2 est plus faible. Ainsi, il est clair que, le point de déclenchement du marteau doit varier en fonction de la vitesse du chariot et du temps de vol du marteau d'impression pour que le pétale frappe le support d'impression au point d'impression désiré.

Comme indiqué dans le brevet des E.U.A. No. 4 030 591, le mouvement du chariot peut être choisi de façon à s'effectuer à plusieurs vitesses différentes selon le temps nécessaire à la roue ou disque d'impression pour se déplacer entre deux caractères adjacents à imprimer. Dans l'imprimante décrite dans ce brevet, quatre vitesses différentes sont utilisées pour le chariot, et, aux fins de l'illustration de la présente invention, le déplacement du chariot 1 sera, de même, considéré comme s'effectuant à une vitesse choisie parmi quatre vitesses distinctes V1, V2, V3 et V4, dont les valeurs croissent dans cet ordre. Ainsi, en choisissant la vitesse la plus élevée à laquelle le chariot peut se déplacer pour un changement choisi quelconque de la position de la roue d'impression, lorsqu'elle se déplace entre les caractères successifs à imprimer (ou pour effectuer des espacements si de tels espacements existent dans la séquence de caractères à imprimer), la vitesse d'impression de l'imprimante peut être poussée au maximum. L'appareil selon l'invention permet l'actionnement du marteau d'impression en coordination avec la vitesse choisie du chariot afin d'assurer que, lorsque différentes vitesses du chariot sont choisies, le marteau d'impression est actionné au moment approprié pour permettre au pétale d'impression de frapper le support d'impression au point d'impact désiré.

Comme précédemment noté, un autre aspect important du présent appareil est le fait qu'il comporte des dispositions pour faire varier la force de frappe du marteau d'impression sur un pétale en fonction du caractère porté par ce pétale afin d'améliorer la qualité d'impression. Cependant, étant donné que les variations de la force de frappe provoquent des variations du temps de vol du pétale, c'est-à-dire du temps s'écoulant entre le moment où le pétale est frappé par le marteau et le moment où le pétale vient frapper la ligne d'impression, il est, en outre, nécessaire d'effectuer une coordination de la vitesse du chariot et du point de déclenchement du marteau avec le temps de vol du pétale pour chacun des temps de vols différents (ou forces de frappe) qui peuvent être choisis.

Dans le cas où la force qui provoque la frappe du pétale par le marteau d'impression 10 est constante, comme décrit dans le brevet des E.U.A. No. 4 030 591, il suffit de coordonner le point de déclenchement du marteau avec l'information concernant la vitesse du chariot pour assurer que le point d'impact correct est frappé pour chacune des différentes vitesses du chariot. Cependant, lorsque l'on désire faire varier la force d'impact du marteau, en faisant varier la largeur ou durée de l'impulsion de déclenchement appliquée au marteau, on provoque également une variation du temps de vol du marteau d'impression et du pétale. De ce fait, il devient également nécessaire de coordonner cette information de temps de vol, ou de largeur d'impulsion, avec l'information relative à la vitesse du chariot et au temps de commencement de la séquence de déclenchement du marteau.

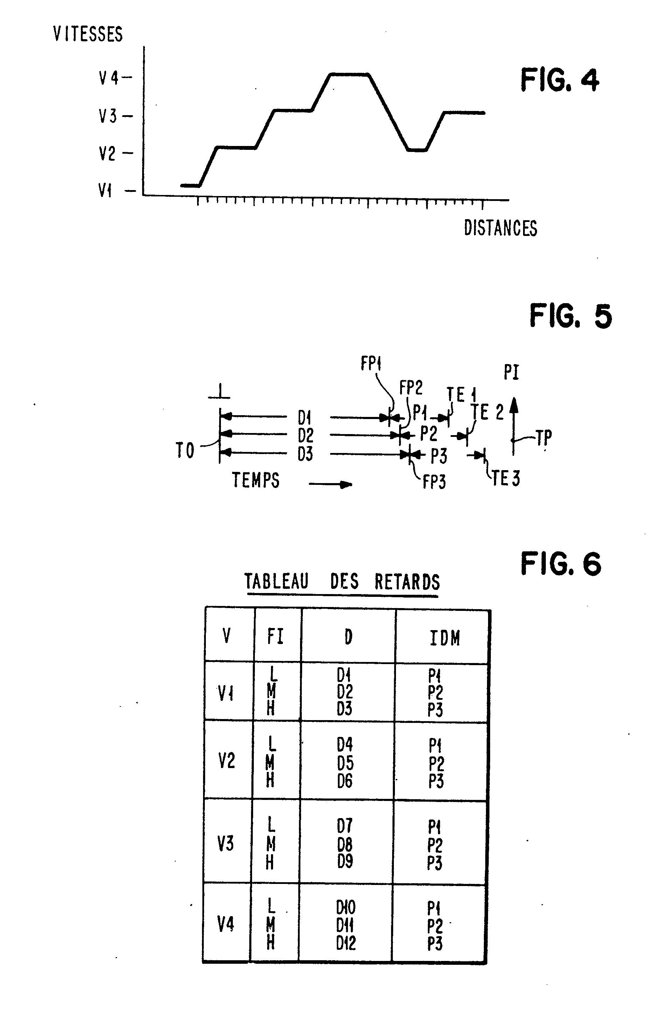

Ces relations seront mieux comprises en se reportant aux figures 4, 5 et 6. La figure 4 représente un exemple caractéristique de l'excursion du chariot 1 aux quatre vitesses différentes V1, V2, V3 et V4 (portées en ordonnées) sur une certaine distance totale (portée en abscisses) qui, dans le présent cas, est approximativement de 12 mm, soit 0,4 mm par déviation. Dans cet appareil, il est également désirable de pouvoir produire des impulsions de déclenchement du marteau d'impression de durées ou largeurs différentes, telles que P1, P2 et P3, représentées sur la figure 5. En outre, pour assurer ce résultat lorsque le marteau est déclenché par l'une des trois impulsions de différentes largeurs (chacune représentant respectivement une force de frappe différente) et lorsque le chariot se déplace à l'une des quatre vitesses différentes, un retard approprié est engendré après le commencement du cycle d'actionnement du marteau d'impression et dure jusqu'au déclenchement effectif du marteau d'impression. Ainsi, pour toute combinaison de l'une des quatre vitesses du chariot avec l'une des trois largeurs d'impulsion de déclenchement du marteau, le point d'impact ou d'impression tombe toujours à l'emplacement désiré. Sur la figure 5, on a donné un exemple des différents retards qui doivent être utilisés à partir du moment où une impulsion de synchronisation du marteau commence, au temps T0, jusqu'aux instants correspondant au commencement de l'impulsion de déclenchement du marteau qui sont respectivement FP1, FP2 ou FP3, afin d'assurer l'impression au moment TP, au point d'impression PI comme représenté. Trois retards D1, D2 et D3 ont été représentés et, dans cet exemple, étant donné que la vitesse du chariot est toujours la même, par exemple V1, les différences entre les durées des retards D1, D2 et D3 dépendent de la largeur des impulsions de déclenchements P1, P2, P3. Dans l'exemple donné, on a admis que les durées des impulsions P1, P2, P3 croissaient dans cet ordre, et que chacune de ces impulsions commençait à des instants de déclenchement respectifs FP1, FP2 et FP3. Ces impulsions se terminent à des instants TE1, TE2, TE3 respectifs avant l'instant TP du point d'impression. Etant donné que l'impulsion P3 commande le marteau 10 le plus fortement, le temps de vol du marteau entre les instants FP3 et TP est le plus court, de même que le temps qui s'écoule entre la fin TE3 de l'impulsion et l'instant TP du point d'impression. Le temps du vol de marteau, lorsqu'il est actionné par l'impulsion P2 est, d'une manière correspondante, plus long que le temps de vol du marteau d'impression lorsqu'il est actionné par l'impulsion P3 et le temps de vol du marteau lorsqu'il est actionné par l'impulsion P1 est le plus long des temps de vol pour les trois impulsions indiquées. Ainsi, du fait de ces temps de vol différents, il est nécessaire, pour coordonner l'instant d'impression du pétale qui est frappé par le marteau d'impression, d'introduire un retard approprié pour chacune des forces d'impact différentes qui peuvent être choisies pour le marteau d'impression et pour chacune des différentes vitesses qui peuvent être choisies pour le chariot 1.

La figure 6 représente un tableau des retards qui donne la liste des divers retards (figurant dans la colonne D) qui peuvent être choisis pour une combinaison appropriée d'une vitesse choisie de déplacement du chariot (figurant dans la colonne V) et d'une force d'impact choisie du marteau d'impression (figurant dans la colonne F). Comme indiqué sur la figure 6, chacune des impulsions de déclenchement du marteau P1, P2 et P3 (figurant dans la colonne IDM) correspond respectivement à un impact léger, un impact moyen ou un impact dur du marteau d'impression. Ces impacts sont référencés respectivement par L, M et H dans la colonne FI. Ainsi, pour chacune des quatre vitesses V1, V2, V3 et V4 du chariot, l'une des trois conditions d'impact, légère, moyenne ou dure, (assurées par les impulsions P1, P2 et P3) peut être choisie. Etant donné que ceci signifie que douze combinaisons vitesse-impact sont possibles, il est nécessaire de prévoir 12 retards distincts, D1 à D12, pour coordonner le temps de déclenchement et le temps de vol du marteau d'impression avec la vitesse du chariot. Ainsi, dans l'exemple représenté ici, un microprocesseur approprié, utilisé pour commander le mouvement du chariot, le mouvement de la roue d'impression et l'actionnement du marteau d'impression peut être programmé pour produire un retard approprié, D1 à D12, lorsqu'il reçoit le signal de synchronisation du marteau et lorsqu'il reçoit l'information relative à la vitesse du chariot et à la durée de l'impulsion de déclenchement choisie.

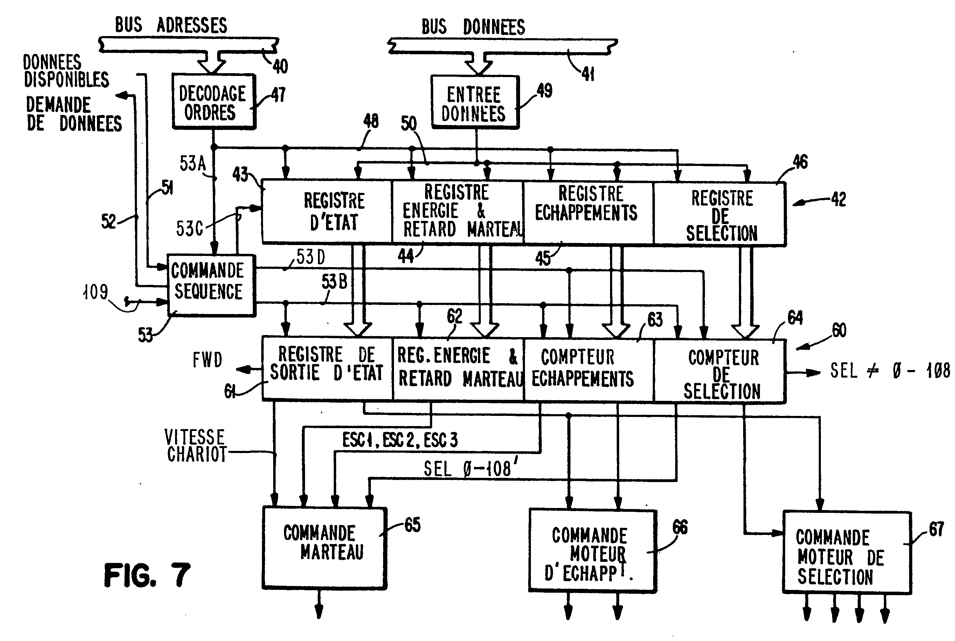

Sur la figure 7 à laquelle on se référera maintenant, on a représenté un schéma des circuits qui peuvent être utilisés et qui font application des principes de la présente invention ci-dessus décrits pour fournir les signaux de commande appropriés au circuit d'excitation 21 du moteur 8 du chariot (appelé également ici, circuit d'excitation du moteur d'échappement), au circuit 22 d'excitation du moteur de la roue ou disque d'impression et au circuit 23 d'excitation du solénoïde du marteau. Les données qui doivent être imprimées proviennent d'une source de données (non représentée) qui peut être une mémoire tampon de données classique ou un dispositif d'entrée à clavier. Les données provenant de la source de données sont appliquées à l'entrée d'un ordinateur ou microprocesseur approprié dont seuls les bus de sortie ont été représentés sur la figure 7. Le microprocesseur peut être un microprocesseur ou ordinateur disponible dans le commerce approprié quelconque, tel que l'ordinateur IBM 7. Le microprocesseur reçoit les données d'entrée, effectue certains calculs puis transmet en sortie une série de nombres binaires soit sur un bus d'adresses 40 soit sur un bus de données 41, comme représenté sur la figure 7.

En réponse aux données reçues du microprocesseur, les circuits représentés sur la figure 7 appliquent les impulsions de commande appropriées aux circuits 21, 22 et 23 afin de provoquer le déplacement, par les moteurs pas-à-pas 3 et 8, du disque et du chariot jusqu'aux positions correctes et afin d'actionner le marteau d'impression 10 pour imprimer les données fournies par la source de données. Les signaux d'entrée appliqués à chacun des circuits d'excitation 21 et 22 comprennent une information indiquant le sens dans lequel le moteur pas-à-pas doit se déplacer et le nombre de pas dont il doit se déplacer, étant entendu qu'une impulsion est produite par le circuit de commande approprié pour chaque pas des moteurs 3 et 8.

Comme représenté sur la figure 7, le circuit de la présente invention comporte plusieurs registres intermédiaires, désignés par la référence générale 42, qui reçoivent des informations du microprocesseur par l'intermédiaire du bus d'adresse 40 et du bus de données 41. Les registres intermédiaires 42 comportent un registre 43 d'état d'exécution qui commande la vitesse de déplacement du chariot 1, un registre 44 d'énergie du marteau qui met en mémoire les données concernant l'instant de commencement et la durée de l'impulsion d'énergie d'actionnement du marteau et les retards D1 à D12 correspondants, un registre d'échappements 45 qui reçoit et met en mémoire les données relatives à l'importance du déplacement (ou échappement) du chariot et un registre de sélection 46 qui reçoit du microprocesseur les données relatives à la sélection des caractères sur le disque d'impression 2 et met en mémoire ces données. Afin de charger dans les registres intermédiaires 42 les données provenant du microprocesseur, les données d'adresses présentes sur le bus 40 du microprocesseur sont appliquées à un circuit 47 de décodage des ordres et l'adresse décodée est appliquée par un bus de commande 48 aux registres intermédiaires respectifs. De même, les données provenant du bus de données 41 du microprocesseur sont acheminées par une porte 49 d'entrée du bus de données et par un bus de données 50 jusqu'aux entrées respectives des registres intermédiaires 42. Le microprocesseur est également raccordé par une ligne de dérivation 53A du bus de commande 48, par une ligne 51 de « données disponibles » et par une ligne 52 de « demande de données », à un circuit 53 de commande de séquence qui commande la séquence des opérations des circuits de la figure 7 et du microprocesseur comme expliqué ci-après. Etant donné que l'impression est effectuée par l'appareil de la présente invention pendant que le chariot est en mouvement, il est nécessaire d'utiliser les registres intermédiaires 42 pour que les données provenant du microprocesseur puissent y être stockées avant leur utilisation effective, afin de permettre au microprocesseur d'accumuler des données suivantes et de permettre le stockage de nouvelles données dans les registres intermédiaires lorsque les données précédemment stockées ont été évacuées des registres. De cette manière, les données sont mises à la disposition des registres d'exécution des circuits de la figure 7 décrits ci-dessous chaque fois que ceci est nécessaire pour permettre le fonctionnement continu de l'appareil.

En plus des registres intermédiaires mentionnés ci-dessus, les circuits de la figure 7 comprennent également plusieurs registres d'exécution, désignés par la référence générale 60. En général, à la suite de la réception d'un ordre de chargement approprié, les registres d'exécution 60 reçoivent les informations contenues dans les registres intermédiaires 42 et les mettent en mémoire, permettant ainsi aux registres intermédiaires de recevoir alors de nouvelles données pendant que les données contenues dans les registres d'exécution sont traitées. Comme représenté sur la figure 7, un registre 61 de sortie d'état d'exécution est prévu pour recevoir les données du registre 43 d'état d'exécution et les mettre en mémoire, un registre 62 d'énergie et de retard de marteau est prévu pour recevoir les données du registre 44 d'énergie du marteau et les mettre en mémoire, un compteur régressif d'échappement 63 est prévu pour recevoir les données du registre d'échappements 45 et les mettre en mémoire et un compteur régressif de sélection 64 est prévu pour recevoir les données du registre de sélection 46 et les mettre en mémoire. Les sorties des registres respectifs 61 à 64 sont raccordées, comme représenté sur la figure 7, à un circuit logique 65 de commande du marteau pour commander l'actionnement du marteau d'impression 10, à un circuit logique 66 de commande du moteur d'échappement pour commander le mouvement du chariot 1 et à un circuit logique 67 de commande du moteur de sélection pour commander le mouvement du disque d'impression 2.

Au cours du fonctionnement de l'appareil représenté sur la figure 7, un signal de commande en provenance du microprocesseur, appliqué sur la ligne 53A, est transmis au circuit 53 de commande de séquence pour commencer la séquence d'opérations de l'appareil d'impression de l'invention. Lorsque chaque série de données du microprocesseur a été traitée, le circuit 53 de commande de séquence informe le microprocesseur, par un signal transmis sur la ligne 52, que les registres intermédiaires 42 sont prêts à recevoir le lot suivant de données. La réponse « données disponibles » transmise par le microprocesseur sur la ligne 51 déclenche une séquence de commandes au moyen de laquelle, un signal de prélèvement de données appliqué par le circuit 53 de commande de séquence sur une ligne 53C, met les registres intermédiaires 42 en état de recevoir de nouvelles données du microprocesseur. Le registre approprié est adressé par le microprocesseur au moyen de bus de commande 48, et lorsque l'adresse correcte est reçue par les registres individuels, les données destinées au registre adressé sont transmises par la porte d'entrée 49 et le bus de données 50 afin d'être enregistrées dans ce registre. Une fois cette opération effectuée, le circuit 53 de commande de séquence produit sur une ligne 53B un signal de commande de chargement qui est appliqué, à chacun des registres d'exécution 60 pour permettre le transfert des données contenues dans les registres intermédiaires 42 aux registres d'exécution 60. Une fois cette opération effectuée, le circuit 53 de commande de séquence demande de nouvelles données au microprocesseur, lequel fonctionne alors pour fournir la série suivante de données qui doivent être stockées dans les registres intermédiaires 42. Naturellement, pendant que les diverses opérations sont effectuées, les données contenues dans les registres d'exécution peuvent être traitées.

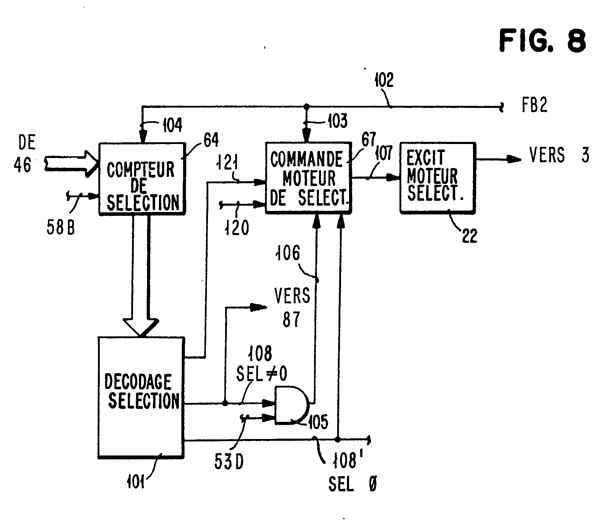

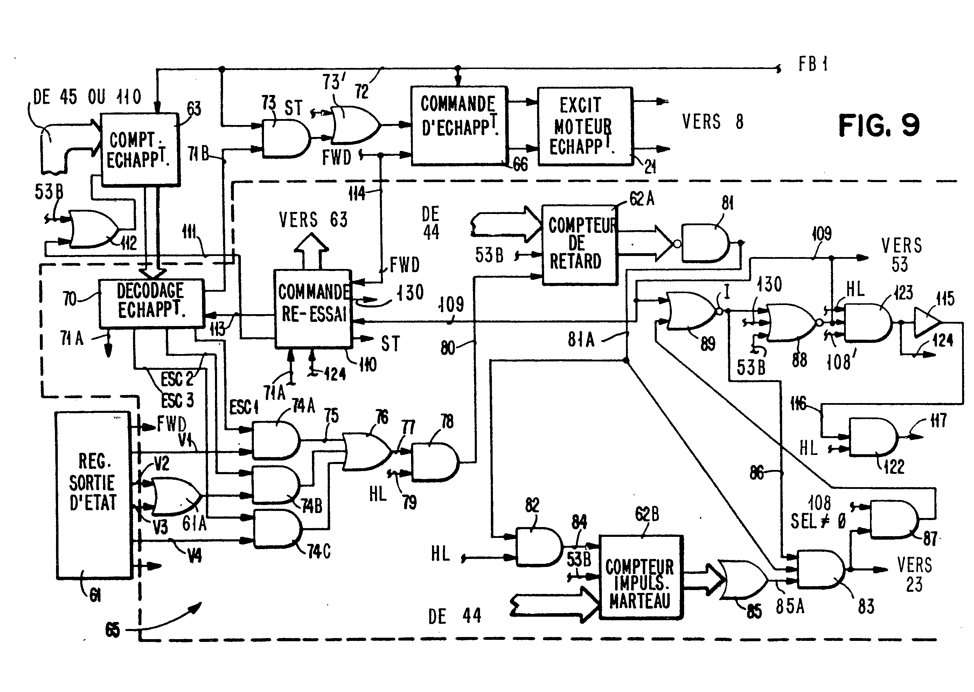

On décrira maintenant en se référant aux figures 8 et 9 les opérations de synchronisation effectuées conformément à la présente invention. Les détails du circuit logique de commande de sélection de caractères ont été représentés sur la figure 8 tandis que les détails du circuit logique de commande du moteur d'échappement et du solénoïde d'actionnement du marteau ont été représentés sur la figure 9. On décrira tout d'abord le fonctionnement de l'appareil dans le cas où la synchronisation requise entre l'échappement (chariot) et la sélection de caractère (disque) se produit. On décrira ensuite le fonctionnement dans le cas où la synchronisation requise ne se produit pas et où l'opération de réessai d'impression à la volée de la présente invention est effectuée.

Comme représenté sur la figure 9 à laquelle on se référera, les données d'échappement mises en mémoire dans le registre 63 sont transmises par groupes de 12 bits à un circuit 70 de décodage d'échappement qui produit trois signaux de sortie ESC1, ESC2 et ESC3. Ces signaux représentent le nombre d'unités de déplacement dont le chariot est écarté de l'échappement zéro, le signal ESC1 représentant une unité, le signal ESC2 deux unités et le signal ESC3 trois unités à partir de zéro. L'information à partir de laquelle ces signaux sont obtenus peut provenir du détecteur FB1 dont les signaux sont appliqués sur la ligne d'entrée 72 et chaque unité peut correspondre à un nombre prédéterminé d'impulsions du détecteur FB1. En outre, le circuit de décodage 70 produit sur la ligne 71A un quatrième signal de sortie indiquant que le chariot a atteint le point zéro (ce signal est appelé ESCØ) et sur la ligne 71B un signal de sortie indiquant que le chariot n'a pas atteint le point zéro (ce signal est appelé ESC ≠ 0). Ainsi, tant que la ligne 71B est à un haut niveau et qu'un signal est reçu sur la ligne 72, de l'indicateur de position FB1, un circuit ET 73 applique, par l'intermédiaire d'un circuit OU 73', un signal de sortie actif au circuit 66 de commande du moteur d'échappement pour provoquer l'actionnement du moteur. Cet actionnement se poursuit tant que le signal ESC ≠ Ø de la ligne 71B est à un haut niveau.

Etant donné que la vitesse VI est la vitesse lente du déplacement du chariot, le signal de sortie ESC1 du décodeur d'échappements 70 qui représente une position d'échappement écartée d'une unité de la position zéro peut être combiné dans une porte ET 74A avec le signal de vitesse VI du registre 61 de sortie d'état d'exécution de sorte que, lorsque la vitesse du moteur d'échappement est égale à VI et que le chariot se trouve à une unité du point zéro, comme indiqué par le signal ESC1, un signal de sortie est produit sur la ligne 75 et appliqué à une porte OU 76 qui applique, à son tour, un signal de sortie sur une ligne 77 à une porte ET 78 qui est commandée (rendue passante) par une impulsion d'horloge (HL) qui lui est appliquée sur une ligne 79. De la même manière, le signal d'espacement ESC2 peut être combiné dans un circuit ET 74B avec les signaux issus du registre 61 de sortie d'état d'exécution représentant les vitesses du chariot V2 et V3 (combinés par un circuit OU 61A) et le signal d'espacement ESC3 peut être combiné dans un circuit ET 74C avec le signal de vitesse du chariot, V4. Ainsi, lorsque les conditions, qui indiquent que le chariot est arrivé à une distance égale à une, deux ou trois unités du point zéro au cours du déplacement à l'une des vitesses V1 à V4, sont réunies, la porte ET 78, qui est rendue passante par le signal d'horloge appliqué sur la ligne 79, produit, sur la ligne 80, un signal de synchronisation du marteau. Ce signal est celui dont il a été question lors de la description de la figure 5 et qui se produit au temps T0. Il est utilisé pour actionner un compteur régressif de retard 62A dans lequel ont été précédemment chargées les données, en provenance du registre 44, indiquant la durée du retard requis pour la période de temps entre l'impulsion de synchronisation du marteau et le commencement de l'impulsion de déclenchement (FP1, FP2 ou FP3). Comme déjà indiqué en se référant au tableau de la figure 6, l'information contenue dans le compteur régressif de retard 62A peut être l'un des douze nombres de retard et ce nombre est contenu dans 8 bits de données reçus par le compteur. La sortie du compteur est inversée et appliquée à une porte ET 81. Ainsi, lorsque le compteur 62A a été décrémenté jusqu'à zéro, un signal de sortie est produit par un circuit ET 81 (signal désigné TMR Ø ou temps zéro) sur une ligne 81A et ce signal de sortie est appliqué à l'entrée d'un premier circuit ET 82 et d'un second circuit ET 83. Le circuit ET 82 est également conditionné par une impulsion d'horloge (HL) et produit, sur une ligne 84, lorsqu'il reçoit simultanément le signal TMR Ø du circuit 81 et le signal d'horloge HL, un signal de sortie qui est appliqué à l'entrée d'un compteur régressif 62B d'impulsion du marteau qui détermine la durée de l'impulsion utilisée pour actionner le marteau. L'information du registre 44 contenue dans 8 bits et indiquant celle des trois largeurs d'impulsion P1, P2 ou P3 que doit avoir l'impulsion, comme déjà décrit en se référant aux figures 5 et 6, a déjà été chargée dans le compteur 62B. Le signal de sortie du compteur est appliqué à une porte OU 85 de sorte que, tant que le compteur continue de compter, un signal (désigné HPC ≠ Ø) est produit par une porte ET 85, sur sa ligne de sortie 85A, et appliqué à la porte ET 83. Ainsi, tant qu'une impulsion est produite pour actionner le marteau d'impression, comme indiqué par le signal HPC ≠ Ø sur la ligne 85A (compte du compteur 62B non égal à zéro) après que le retard a expiré, comme indiqué par le signal TMR Ø de la porte ET 81, la porte ET 83 est rendue passante par ces deux signaux. Cependant, la porte ET 83 doit recevoir un troisième signal d'entrée pour que le marteau soit actionné et elle reçoit ce signal sur une ligne 86. L'absence d'un signal sur la ligne 86 empêche le déclenchement du marteau. Ainsi, grâce à l'emploi du circuit de blocage représenté, dans le cas où un pétale n'a pas encore été sélectionné, le marteau est empêché de frapper le pétale jusqu'à ce qu'il reçoive la commande suivante indiquant qu'un pétale a été sélectionné.

L'opération de blocage se produit de la manière suivante : la bascule bistable formée par les circuits NI 88, 89 a été initialement mise à l'état actif (1) par le signal de chargement appliqué à la porte NI 88 par la ligne 53B. Ceci produit initialement un signal sur la ligne 86. Ainsi, lorsque la ligne 81A produit le signal TMR Ø et la ligne 85A le signal HPC ≠ Ø, la porte ET 83 produit un signal de sortie qui est appliqué à l'entrée d'une porte ET 87 et au circuit 23 de commande du marteau. Dans le cas où le pétale n'a pas encore été sélectionné, c'est-à-dire lorsque le disque rotatif n'a pas atteint le caractère choisi pour la position d'impression suivante que le chariot a déjà atteinte et qu'ainsi, un signal indiquant que la sélection n'est pas faite (ce signal est appelé SEL ≠ Ø) est engendré et est appliqué sur une ligne 108 à l'entrée de la porte ET 87, cette dernière produit un signal de sortie qui est appliqué à la porte NI 89 ramenant de ce fait à zéro le signal de la ligne 86 et, ainsi, le signal de sortie de la porte ET 83, avant que le circuit de commande du marteau ait produit une énergie suffisante pour constituer une impulsion de déclenchement. Ceci annule l'impulsion de déclenchement. A ce stade, l'opération de réessai selon la présente invention est exécutée.

Cependant, avant d'examiner l'opération de réessai d'impression à la volée de la présente invention on examinera le fonctionnement du compteur régressif de sélection et du circuit logique de sélection en se référant à la figure 8. Comme représenté sur cette figure, les données de sélection contenues dans le compteur régressif de sélection 64 et qui lui proviennent du registre 46, sont transmises par groupes de six bits à un circuit 101 de décodage de sélection qui produit l'un ou l'autre de deux signaux de sortie à savoir un premier signal indiquant que le caractère choisi a été sélectionné et un second signal indiquant que la sélection n'est pas faite. Ces signaux sont respectivement désignés par SEL Ø et SEL ≠ Ø et sont appliqués respectivement sur les lignes 108' et 108. L'information à partir de laquelle ces signaux sont calculés peut provenir du détecteur FB2 qui détecte la position du disque et fournit ses signaux sur la ligne d'entrée 102. Le signal appliqué sur la ligne 102 informe le circuit logique de sélection 67, auquel il est appliqué sur une ligne 103, du déplacement incrémentiel du disque et ce signal est également appliqué sur une ligne 104 au compteur régressif de sélection 64. Tant que le compte zéro n'a pas été atteint par ce compteur, le signal SEL ≠ Ø sur la ligne 108, est appliqué par l'intermédiaire d'une porte ET 105 et d'une ligne 106, au circuit logique 67 de commande de sélection qui continue d'actionner, au moyen d'un signal appliqué sur sa ligne de sortie 107, le circuit 22 afin de faire fonctionner le moteur 3 et faire tourner le disque dans le sens désiré. Le sens de rotation désiré est déterminé par la présence ou l'absence d'un signal appliqué, sur la ligne 120, au circuit logique 67 de commande de sélection par le registre de sortie d'état d'exécution 61. Un signal présent sur la ligne 120 indique que le disque d'impression doit tourner dans le sens des aiguilles d'une montre tandis que l'absence d'un signal sur la ligne 120 indique au circuit logique 67 de commande de sélection que le disque d'impression doit tourner en sens inverse des aiguilles d'une montre. Ainsi, tant que le signal SEL ≠ Ø sur la ligne 108 est appliqué à la porte ET 105 en même temps qu'un signal de départ provenant du circuit 53 de commande de séquence par la ligne 53D (voir figure 7), le circuit logique de commande de séquence continue de faire fonctionner le disque de la manière indiquée.

Lorsque. le disque s'approche du point de sélection zéro, c'est-à-dire lorsqu'il se trouve au point de sélection 1 ou à un point voisin, le compteur régressif de sélection 64 applique au circuit logique 67 de commande de sélection, par l'intermédiaire du décodeur de sélection 101 et de la ligne 121, un signal de décélération qui provoque la décélération du disque. Lorsque le point de sélection zéro est atteint, le disque est arrêté pendant un bref instant. Au cours du fonctionnement normal, cet arrêt doit coïncider avec l'application des signaux à la porte ET 83 (fig. 9) sur la ligne 81A (signal TMR Ø) ainsi que sur la ligne 85A (signal HPC ≠ Ø). Ceci a pour effet l'application d'un signal à l'une des entrées de la porte ET 87 (fig. 9), comme précédemment décrit, tandis qu'aucun signal SEL ≠ Ø n'est appliqué à la porte ET 87 par la ligne 108. Lorsque le signal SEL ≠ Ø n'est pas appliqué à la porte 87, il n'y a aucun signal de blocage de l'impulsion appliquée par l'intermédiaire de la porte ET 83 au circuit de commande du marteau et l'impression est effectuée.

Par contre, si le disque d'impression n'a pas atteint la position de sélection zéro au moment où le chariot a atteint la position d'impression suivante, comme indiqué par les signaux TMR Ø et HPC ≠ Ø appliqués à la porte ET 83 par les lignes 81A et 85A, le signal SEL ≠ Ø continue d'être appliqué par la ligne 108 à la porte ET 87 (fig. 9) ce qui a pour effet que la bascule bistable formée par les portes NI 88 et 89 produit un signal sur la ligne 109 empêchant l'actionnement du circuit de commande du marteau et commençant la séquence de ré-essai de la présente invention. Le signal de ré-essai est appliqué par la ligne 109 au circuit 53 de commande de séquence (fig. 7) pour empêcher ce dernier d'entreprendre un nouveau processus de chargement de données des registres 42 dans les registres 60 par la ligne 53B ou de produire un signal de départ pour le cycle suivant sur la ligne 53D. Ainsi, le cycle d'impression suivant est maintenu en suspens en l'attente du résultat de la séquence de ré-essai. Le même signal de ré-essai produit sur la ligne 109 rend actif le circuit 110 de commande de ré-essai qui prend la commande des opérations à la place du circuit 53 de commande de séquence qui a été mis dans un état inactif.

On décrira maintenant la séquence de ré-essai en se référant à la figure 9. Le fait qu'il y a lieu ou non d'effectuer un ré-essai est déterminé par la présence ou l'absence d'un signal sur la ligne 109. S'il y a lieu d'effectuer un ré-essai, le compteur d'échappements 63 est mis à une valeur « m ». La valeur m représente le compte nécessaire pour arrêter le chariot. Cette opération est effectuée sous la commande du circuit 110 de commande de ré-essai qui applique une séquence de 12 bits conservée en mémoire dans ce circuit, au compteur d'échappements 63. Ce transfert est effectué en même temps qu'un signal de chargement de ré-essai est appliqué par la ligne 111 au compteur 63 par l'intermédiaire d'une porte OU 112, laquelle transmet également le signal de chargement normal de la ligne 53B issue du circuit 53 de commande de séquence, au cours du fonctionnement normal. Pendant cette séquence au cours de laquelle le chariot est amené à l'arrêt, le signal de sortie essentiel du décodeur d'échappements 70 est le signal de sortie ESC ≠ Ø appliqué à la porte ET 73 sur la ligne 71B. A cet égard, on notera que le circuit logique 66 de commande du moteur d'espacement et le circuit 21 d'excitation du moteur d'espacement fonctionnent de la manière précédemment décrite en se référant au fonctionnement normal.

Au cours de cette séquence de ré-essai, il est inutile que les signaux du compteur 63 soient appliqués au décodeur 70 pour produire les signaux ESC1, ESC2 et ESC3. Le compteur 63 et le décodeur 70 n'ont besoin de fonctionner que dans le mode d'arrêt c'est-à-dire qu'aucun réglage de vitesse n'est nécessaire. Par conséquent, le circuit logique 110 de commande de ré-essai applique sur la ligne 113 un signal au décodeur 70 sous la commande duquel le décodeur fonctionne seulement dans le mode d'arrêt, c'est-à-dire qu'il ne produit un signal que sur la ligne 71A (signal ESC Ø) ou sur la ligne 71B (signal ESC ≠ Ø). Ainsi, les portes ET 74A, 74B et 74C ne produisent aucun signal et, par conséquent, il n'est pas produit d'impulsion de synchronisation du marteau sur la ligne 80 et le circuit logique de commande du marteau ne fonctionne pas au cours de ce cycle d'arrêt.

Lorsque le compteur 63 atteint le compte zéro, le signal ESC ≠ Ø appliqué sur la ligne 71B à la porte ET 73 retombe à zéro et l'excitation du moteur d'échappement 8 est arrêtée. A ce stade, de nouveau sous la commande du circuit 110 de commande de ré-essai, 12 autres bits sont chargés dans le compteur 63. Ces bits représentent une valeur « n + m » dans laquelle « m » a la valeur précédemment indiquée tandis que « n » a une valeur qui est inférieure à la distance d'un échappement normal ou distance entre deux positions d'impression du chariot ; c'est-à-dire que l'objet de l'utilisation de cette valeur est de déplacer le chariot en sens inverse sur une distance (m + n) égale à la somme de la distance de dépassement, ou distance nécessaire pour arrêter le chariot (m) plus une distance (n) qui est inférieure à la distance entre deux positions d'impression du chariot, c'est-à-dire que le chariot effectue un retour arrière sans atteindre, cependant, la position d'impression précédente.

Si le chariot se déplaçait antérieurement en marche avant, sa commande est maintenant réglée de façon qu'il se déplace en marche arrière. Par contre, si le chariot ne se déplaçait pas en marche avant, sa commande est maintenant réglée de façon qu'il se déplace en marche avant. En d'autres termes, au cours des opérations d'impression normales, le chariot peut se déplacer en marche avant ou en marche arrière. Par exemple, dans de nombreuses opérations, le chariot peut imprimer les lignes successives dans des sens opposés pour obtenir le meilleur rendement en fonctionnement automatique. Normalement, le sens de déplacement du chariot est déterminé par la présence ou l'absence d'un signal FWD engendré par le registre 61 et appliqué au circuit logique 66 par la ligne 114. S'il y a un signal, le chariot se déplace en marche avant et en l'absence de signal le chariot se déplace en marche arrière. Ainsi, au cours du ré-essai, le circuit logique 110 de commande de ré-essai détermine le sens dans lequel le chariot se déplaçait en fonction de la présence ou de l'absence d'un signal approprié sur la ligne 114, ce qui détermine le sens du retour arrière du chariot. Au cours de ce retour arrière du chariot, la valeur m + n est chargée dans le compteur régressif 63 sous la forme de 12 bits de données qui sont également conservés en mémoire dans le circuit logique 110 de commande de ré-essai. Ce chargement est déclenché par un signal appliqué sur la ligne 111, et par l'intermédiaire de la porte OU 112, au compteur régressif 63. Ensuite, le retour arrière est effectué d'une manière générale semblable à celle déjà décrite, le sign  de la ligne 113 continuant d'être appliqué au décodeur d'échappements 70 de sorte que ce décodeur fonctionne à nouveau dans le mode d'arrêt, c'est-à-dire que les signaux ESC Ø sur la ligne 71A et ESC ≠ Ø sur la ligne 71B sont les seuls signaux produits. Lorsque le compteur 63 atteint le compte zéro, c'est-à-dire lorsque le chariot a été reculé de la distance m + n, une vérification est effectuée pour déterminer si le circuit de sélection, qui a continué de fonctionner de façon ininterrompue au cours de ce cycle de ré-essai, a atteint zéro. Si le circuit de sélection n'a pas encore atteint zéro, il est mis fin à l'ensemble de l'opération d'impression et le système appelle le programme approprié du microprocesseur de commande pour déterminer la nature de l'erreur. Par contre, si le circuit de sélection a finalement atteint zéro, le déplacement initial vers l'avant (ou vers l'arrière) du chariot est recommencé, comme on le décrira ci-après.

La détermination de l'état de la sélection est obtenue de la manière suivante : le signal de sortie de ré-essai de la porte NI 88 du circuit de bascule bistable est également appliqué sur la ligne 109 à une porte ET 123. Le signal SEL Ø du décodeur de sélection 101 (figure 8) sur la ligne 108' est également appliqué à la porte ET 123. Le troisième signal d'entrée de la porte ET 123 est une impulsion d'horloge (HL) qui peut être engendrée à un moment du cycle de ré-essai qui correspond à l'instant où le retour arrière du chariot est achevé. Le signal de sortie de la porte ET 123 est appliqué sur la ligne 124 au circuit logique 110 de commande de ré-essai en tant que signal de remise en route. Ainsi, si le compteur de sélection a finalement atteint le compte zéro, au moment où l'impulsion d'horloge est appliquée, le signal de remise en route transmis sur la ligne 124, commande au circuit logique 110 de remettre en route le mouvement initial en marche avant (ou arrière) du moteur d'échappement. En outre, le signal de sortie de la porte ET 123 est également appliqué à un inverseur 115 relié par une ligne 116 à une porte ET 122. Le signal d'horloge (HL) qui rend passante la porte ET 123 rend également passante la porte ET 122. Ainsi, si le compteur de sélection n'a pas atteint le compte zéro, un signal d'erreur est engendré par la porte ET 122 et envoyé sur la ligne 117 au processeur de commande.

Aux fins de l'illustration, supposons que le signal SEL Ø a été produit et qu'un signal de remise en route a été transmis au circuit logique 110 de commande de ré-essai sur la ligne 124. La valeur n est chargée dans le compteur 63, n étant la distance dont le chariot a été reculé par rapport à la position d'impression suivante. Ceci est effectué au moyen du transfert de 12 bits, conservés en mémoire dans le circuit logique de commande de ré-essai 110, au compteur 63, de la manière précédemment décrite utilisée pour charger les données dans ce compteur. Ensuite, le sens dans lequel le chariot doit se déplacer afin d'atteindre la position d'impression suivante, est déterminé de la façon décrite ci-dessus. Le signal de départ ST est engendré par le circuit 110 et est appliqué par l'intermédiaire du circuit OU 78' au circuit logique de commande 66 du moteur d'échappement, et le ré-essai est remis à zéro. Ce résultat est obtenu du fait de l'application d'un signal de remise à zéro du ré-essai, issu du circuit logique 110 sur la ligne 130, à la porte NI 88 pour restaurer le circuit de bascule et, toujours sous la commande du circuit logique 110 de commande de ré-essai, le chariot est déplacé en regard de la position d'impression suivante de la manière normale. Aucun signal n'est appliqué sur la ligne 113 au décodeur d'espacement 70 de sorte que ce dernier fonctionne de la manière normale pour produire les signaux ESC2 à ESC3 ainsi que les signaux ESC Ø et ESC ≠ Ø. Etant donné qu'il a déjà été indiqué que le compteur de sélection a atteint zéro, ce qui indique que la roue ou disque d'impression a atteint le caractère choisi pour la position d'impression suivante, la coïncidence désirée se produit et une impression normale du caractère désiré se produit à cette position d'impression suivante.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

**Revendications**

1. Dispositif pour synchroniser les déplacements du chariot (1) et du disque d'impression (2) d'une imprimante à la volée destinée à imprimer des caractères sur les positions d'impression d'une ligne d'impression (LN) d'un document (12), ladite imprimante étant du type qui comporte :

— un chariot (1),

— des premiers moyens moteurs (8) pour déplacer le chariot (1) le long de ladite ligne d'impression (LN), d'une première position d'impression vers une seconde position d'impression,

— un disque d'impression rotatif (2) présentant une pluralité de caractères (9A, 9B, 9C, ...) et monté sur le chariot (1) pour se déplacer avec lui le long de la ligne d'impression (LN),

— un marteau de frappe (10) monté sur ledit chariot (1) pour se déplacer avec lui et pouvant être actionné pour frapper ledit disque (2) lorsqu'un caractère choisi se trouve en regard d'une position d'impression choisie,

— des seconds moyens moteurs (3) pour faire tourner le disque (2) d'une distance angulaire variable, d'un premier caractère choisi coïncidant avec le passage du chariot (1) en regard de ladite première position d'impression, jusqu'à un second caractère coïncidant avec le passage du chariot (1) en regard de ladite seconde position d'impression, le temps nécessaire pour déplacer le disque (2) entre deux caractères quelconques choisis dépendant de leurs emplacements sur le disque,

— des moyens de commande (21, 22, 23) pour commander le fonctionnement des premiers moyens moteurs (8) et des seconds moyens moteurs (3) afin qu'il se produise une coïncidence entre l'arrivée du second caractère en position et l'arrivée du chariot (1) dans la seconde position d'impression et pour commander l'actionnement du marteau de frappe (10) lorsque ladite coïncidence se produit,

ledit dispositif étant caractérisé en ce qu'il comporte :

— des moyens (46, 64, 101, 67, 81, 89, 83, 87) pour détecter un défaut de coïncidence dans ladite seconde position,

— des moyens (61, 63, 70, 110, 66) qui, en réponse à une détection de défaut de coïncidence, commandent lesdits premiers moyens moteurs (8) afin que ces derniers déplacent le chariot (1) en sens inverse et le ramènent vers ladite première position d'impression, tout en permettant la poursuite de la rotation du disque (2) vers le second caractère choisi,

— des moyens (123, 110, 66) pour commander la remise en route du déplacement du chariot (1) vers la seconde position d'impression et

— des moyens (64, 101, 67) pour maintenir le disque d'impression (2) sur le second caractère choisi, si celui-ci a été atteint, jusqu'à l'arrivée du chariot (1) en regard de la seconde position d'impression de telle sorte que ladite coïncidence et l'actionnement du marteau (10) se produisent si le disque d'impression (2) a atteint le second caractère lorsque le chariot (1) atteint ladite seconde position d'impression.

2. Dispositif selon la revendication 1, caractérisé en ce qu'il comporte en outre des moyens (101, 89, 98, 123, 115, 128) pour stopper l'imprimante si le disque d'impression (2) n'a pas atteint le second caractère choisi au moment où le chariot (1) arrive sur ladite seconde position d'impression.

**Claims**

1. Device for synchronizing the movements of the carrier (1) and print disk (2) of an on-the-fly printer to print characters at the print positions of a print line (LN) of a document (12), said printer being of the type which includes :

— a carrier (1),

— first drive means (8) for moving the carrier (1) along said print line (LN) from a first print position to a second print position,

— a rotating print disk (2) provided with a plurality of characters (9A, 9B, 9C, ...) mounted on the carrier (1) to be moved with the latter along the print line (LN),

— a print hammer (10) mounted on said carrier (1) to be moved with the latter and which can be actuated to strike said disk (2) when a selected character arrives in front of a selected print position,

— second drive means (3) for rotating the disk (2) a variable angular distance from a first selected character, coincident with said carrier (1) at said first print position, to a second selected character coincident with said carrier (1) at said second print position, the time required for moving the disk (2) between any two selected characters depending on their locations on the disk,

— control means (21, 22, 23) for controlling the operation of the first drive means (8) and the second drive means (3) so as to establish a coincidence between the arrival of the second character at the print position and the arrival of the carrier (1) at the second print position, and for actuating the print hammer (10) when said coincidence occurs,

said device being characterized in that it includes :

— means (46, 64, 101, 67, 81, 89, 83, 87) for detecting a coincidence failure at said second position,

— means (61, 63, 70, 110, 66) which, responsive to the detection of a coincidence failure, control said first drive means (8) so that the latter reverse the movement of the carrier (1) to return it to said first print position, while permitting the disk (2) to continue rotating towards the second selected character,

— means (123, 110, 66) for reinitiating the movement of the carrier (1) towards the second print position, and

— means (64, 101, 67) for retaining the print disk (2) at the second selected character, if it has been reached, until the arrival of the carrier (1) in front of the second print position, whereby said coincidence and actuation of the hammer (10) occur if the print disk (2) has reached the second print character by the time the carrier (1) has reached said second print position.

2. Device according to claim 1, characterized in that it further includes means (101, 89, 98, 123, 115, 128) for stopping the printer if the print disk (2) has not reached the second selected character by the time the carrier (1) reaches said second print position.

**Ansprüche**

1. Synchronisiervorrichtung zum Fortbewegen des Trägers (1) und der Druckscheibe (2) eines Druckers mit fliegendem Druck zum Drucken von Schriftzeichen auf den Druckpositionen einer Druckzeile (LN) eines Schriftstückes (12), wobei der Drucker folgendes einschließt :

— einen Träger (1),

— erste Antriebsmittel (8) zum Verschieben des Trägers (1) entlang der Druckzeile (LN) von einer ersten Druckposition zu einer zweiten Druckposition,

— eine mit einer Vielzahl von Schriftzeichen (9A, 9B, 9C, ...) versehene drehbare Druckscheibe, die auf dem Träger (1) angeordnet ist und sich mit diesem entlang der Druckzeile (LN) verschiebt,

— einen auf dem Träger (1) befestigten und mit diesem verschiebbaren Druckhammer (10), der auf die Scheibe (2) schlägt, sobald sich ein ausgewähltes Schriftzeichen vor einer ausgewählten Druckposition befindet,

— zweite Antriebsmittel (3) zum Drehen der Scheibe (2) um einen variablen Winkelabstand von einem ersten ausgewählten Schriftzeichen, das mit dem Passieren des Trägers (1) vor der ersten Druckposition zusammenfällt, bis zu einem zweiten mit dem Passieren des Trägers (1) vor der zweiten Druckposition zusammenfallenden Schriftzeichen wobei die zum Fortbewegen der Scheibe (2) zwischen zwei beliebigen ausgewählten Schriftzeichen erforderliche Zeit von deren Placierung auf der Scheibe abhängt,

— Steuermittel (21, 22, 23) zum Inbetriebsetzen der ersten Antriebsmittel (8) und der zweiten Antriebsmittel (3), so daß das Ankommen des zweiten Schriftzeichens an der Druckposition mit dem des Trägers (1) in der zweiten Druckposition zusammenfällt sowie zum Betätigen des Druckhammers (10) sobald sich diese Koinzidenz ergibt,

gekennzeichnet durch :

— Mittel (46, 64, 101, 67, 81, 89, 83, 87) zum Feststellen eines Koinzidenzfehlers in der zweiten Druckposition,

— Mittel (61, 63, 70, 110, 66) zum Betätigen der ersten Antriebsmittel (8) sobald ein Koinzidenzfehler entdeckt ist, damit diese den Träger (1) in die entgegengesetzte Richtung verschieben, um ihn auf die erste Druckposition zurückzubringen, wobei das Weiterdrehen der Scheibe (2) in Richtung des zweiten ausgewählten Schriftzeichens nicht verhindert wird,

— Mittel (123, 110, 66) zur Wiederaufnahme der Fortbewegung des Trägers (1) in Richtung der zweiten Druckposition, und

— Mittel (64, 101, 67) zum Festhalten der Druckscheibe (2) beim zweiten ausgewählten Schriftzeichen, wenn dieses erreicht wurde, bis zum Ankommen des Trägers vor der zweiten Druckposition, in der Weise, daß das Zusammenfallen und das Betätigen des Hammers (10) stattfindet, sobald mit der Druckscheibe (2) das zweite Schriftzeichen zu dem Zeitpunkt positioniert ist, zu dem der Träger (1) bei der zweiten Druckstelle ankommt.

2. Vorrichtung nach Anspruch 1, dadurch gekennzeichnet, daß sie weiterhin über Mittel (101, 89, 98, 123, 115, 128) zum Abstellen des Druckers verfügt, wenn mit der Druckscheibe (2) das zweite ausgewählte Schriftzeichen zum Zeitpunkt des Ankommens des Trägers (1) in der zweiten Druckposition nicht positioniert ist.

# FIG. 1

EXCITATION
MOTEUR
ECHAPPEMENT

EXCITATION
MARTEAU

EXCITATION
MOTEUR
SELECTION

# FIG. 2

$\Delta LN 1$

PI

LN

FP

9A

10

# FIG. 3

$\Delta LN 2$

PI

LN

FP

9A

10

1

VITESSES

V 4 —
V 3 —
V 2 —
V 1 —

DISTANCES

**FIG. 4**

**FIG. 5**

FP1
FP2
PI
TE 1
TE 2
D1
P1
TO
D2
P2
TP
D3
P3
TE 3
TEMPS →
FP3

**FIG. 6**

TABLEAU DES RETARDS

| V | FI | D | IDM |
|---|----|----|-----|
| V1 | L M H | D1 D2 D3 | P1 P2 P3 |
| V2 | L M H | D4 D5 D6 | P1 P2 P3 |
| V3 | L M H | D7 D8 D9 | P1 P2 P3 |
| V4 | L M H | D10 D11 D12 | P1 P2 P3 |

FIG. 7

**FIG. 8**

FIG. 9